# EUROPÄISCHE PATENTSCHRIFT

(11) **EP 3 623 546 B1**
(45) Veröffentlichungstag und Bekanntmachung des Hinweises auf die Patenterteilung: **11.11.2020**
(21) Anmeldenummer: 18193870.5
(22) Anmeldetag: 11.09.2018
(51) Int. Cl.: E04H 6/00, E04H 6/22, E04H 6/24, E04H 6/34, E04H 6/36, B65G 1/04, B62H 3/00

(54) **FÖRDERMITTEL FÜR ZWEIRÄDER**
CONVEYOR FOR BICYCLES
DISPOSITIF DE TRANSPORT POUR DEUX-ROUES

(43) Veröffentlichungstag der Anmeldung: 18.03.2020
(73) Patentinhaber: Smart City Concepts GmbH, 60385 Frankfurt am Main (DE)
(72) Erfinder: Mau, Prof. Dr. Nicole, 60385 Frankfurt am Main (DE); Mau, Prof. Dr. Markus, 60385 Frankfurt am Main (DE); Timmermans, Geert, 6131 AN Sittard (NL); Povse, Iwan, 6131 AN Sittard (NL)
(74) Vertreter: Patentanwälte Dörner & Kötter PartG mbB

(56) Entgegenhaltungen:
- WO-A1-2013/120141
- CH-A2- 711 624
- DE-U1- 9 308 570
- DE-U1- 9 420 039
- FR-A1- 3 031 716
- US-A1- 2007 237 613

## Beschreibung

Die Erfindung betrifft ein Fördermittel für Zweiräder, insbesondere Fahrräder, zur Einbindung in ein automatisches Parksystem nach dem Patentanspruch 1.

Insbesondere in Innenstadtbereichen ist Parkraum sehr knapp und Parkplatzanlagen bzw. Parkhäuser stoßen an ihre Grenzen. Zur Milderung dieser Problematik werden zunehmend automatische Parkplatzsysteme entwickelt, bei denen zu parkende Autos in einem Einfahrtbereich auf eine bewegliche Plattform oder Palette gefahren werden, die dann mit Hilfe von Verschiebeeinheiten und/oder Hubkränen automatisiert durch ein Steuersystem in einem freien Parkbereich abgestellt werden. In der DE 10 2016 217 632 A1 sind weiterhin sogenannte automatische Parkhäuser beschrieben, in welchen Autos mittels einer teilautomatischen oder vollautomatischen Beförderungsvorrichtung vertikal und/oder horizontal in dafür vorgesehenen Parkräumen eingeparkt werden. Hierzu ist für jeden Parkraum eine Palette oder Abstellplattform vorgesehen. Das zu parkende Auto wird vom Fahrer im Bereich einer Einfahrt des Parkhauses auf einer solchen Palette abgestellt. Anschließend wird das Auto gemeinsam mit der Palette automatisch mittels der Beförderungsvorrichtung in einem freien Parkraum abgestellt. Beim Abholen des Autos wird dieses gemeinsam mit der Palette automatisch mittels der Beförderungsvorrichtung aus dem Parkraum in einen Ausfahrtbereich transportiert.

In letzter Zeit sind im Straßenverkehr zunehmend Fahrräder, insbesondere auch sogenannte e-bikes unterwegs, wodurch der Parkraum weiter belastet wird. Zudem gibt es in verschiedenen Städten steigende Anforderungen an Immobilieneigentümer, Abstellplätze für Fahrräder bereitzustellen. Besonders deutlich wird diese Problematik in Universitätsstädten, wo viele Studierende das Fahrrad als bevorzugtes Fahrzeug wählen. Fahrräder sind jedoch zu den heutigen automatischen Parksystemen nur bedingt kompatibel, da die dortigen Paletten und Parkplätze auf die Abmaße von Autos ausgerichtet sind.

Hier setzt die vorliegende Erfindung an. Der Erfindung liegt die Aufgabe zugrunde, ein Fördermittel für Zweiräder, insbesondere Fahrräder bereitzustellen, das zur Einbindung in ein automatisches Parksystem geeignet ist. Gemäß der Erfindung wird diese Aufgabe durch ein Fördermittel mit den Merkmalen des Patentanspruchs 1 gelöst.

Bekannte Fördermittel für Zweiräder werden zum Beispiel in den Dokumenten FR 3 031 716 A1, WO 2013/120141 A1 und CH 711 624 A2 beschrieben.

Mit der Erfindung ist ein Fördermittel für Zweiräder, insbesondere Fahrräder bereitgestellt, das zur Einbindung in ein automatisches Parksystem geeignet ist. Dadurch, dass das Fördermittel eine verfahrbare Plattform aufweist, die auf ihrer Oberseite eine orthogonal zu ihrer Oberfläche angestellte Zweiradaufnahme zur vertikalen Lagerung eines Zweirades aufweist, ist die Bildung einer stellplatzsparenden Zweirad-Lagereinheit ermöglicht. Dabei weist die Plattform vorzugsweise ein rechteckiges Grundmaß auf. Hierdurch ist eine mathematisch einfache, effiziente Ausnutzung von Parkraum ermöglicht. Beispielsweise kann das Grundmaß der Plattform derart gewählt sein, dass die Grundfläche eines vorhandenen Auto-Parkplatzes ein ganzzahliges Vielfaches dieses Grundmaßes ist. Hierdurch ist eine optimale Auslastung einer Parkhausebene bzw. eines Parkhauses mit Autos und Fahrrädern ermöglicht.

Erfindungsgemäß ist die Plattform als FTS-Palette ausgebildet, die eine drahtlose Schnittstelle zur Ansteuerung durch ein Rechnerleitsystem aufweist. Hierdurch ist eine autarke Positionierung des Fördermittels auf einem Parkplatz - gesteuert durch ein vorhandenes Rechnerleitsystem - ermöglicht. Unter einer FTS-Palette wird vorliegend jedwede zur Aufnahme eines Zweirades geeignete Aufnahmevorrichtung verstanden, die selbst oder zusammen mit einem diese aufnehmenden Fördermittel ein fahrerloses Transportsystem ausbildet.

Bevorzugt sind die Rollen des Fördermittels über wenigstens einen angeordneten Elektromotor antreibbar, der mit einem Akkumulator verbunden ist.

In Ausgestaltung der Erfindung weist die Zweiradaufnahme eine Radaufnahme auf, die entlang einer vertikalen Schiene verfahrbar ist. Hierdurch ist die vertikale Positionierung eines Fahrrades auf dem Fördermittel erleichtert.

In weiterer Ausgestaltung der Erfindung ist ein Antrieb angeordnet, über den die Radaufnahme entlang der Schiene verfahrbar ist. Hierdurch ist die Anstellung eines Fahrrades in die vertikale Position weiter erleichtert. Dabei ist der Antrieb bevorzugt als Direktantrieb durch einen Linearmotor gebildet. Derartige Antriebe sind wartungsarm und platzsparend montierbar. Alternativ ist auch ein Riemen- oder Kettenantrieb einsetzbar.

In Weiterbildung der Erfindung weist die Radaufnahme zwei gegenüberliegend angeordnete Backen auf, zwischen denen ein Rad eines Fahrrades einklemmbar ist. Hierdurch ist eine einfache Fixierung eines Fahrrades in vertikaler Position ermöglicht. Alternativ kann auch eine - wenn auch in der Bedienung nicht zu bevorzugende - Einhängvorrichtung für das Rad eines Zweirades angeordnet sein.

In Ausgestaltung der Erfindung sind die Backen zueinander verstellbar ausgebildet. Hierdurch ist die Aufnahme von Rädern unterschiedlicher Reifenbreiten ermöglicht. Bevorzugt ist ein Antrieb angeordnet, über den der Abstand der Backen zueinander verstellbar ist. Alternativ können die Backen auch über Federelemente gegeneinander vorgespannt sein. Vorzugsweise sind die Backen zumindest mit einer elastischen Polsterung zur Aufnahme eines Rades versehen. Hierdurch ist eine schonende Klemmaufnahme ermöglicht.

In Weiterbildung der Erfindung ist auf der Plattform eine Akku-Ladeeinrichtung angeordnet, die bevorzugt mit einer autarken Energieversorgung verbunden ist, die insbesondere durch einen Akkumulator gebildet ist. Hierdurch ist die Aufladung des Akkus eines aufgenommenen e-Bikes während der Parkzeit ermöglicht.

In Ausgestaltung der Erfindung ist der Akkumulator mit einer Induktionsspuleneinheit verbunden, über die er induktiv aufladbar ist. Hierdurch ist eine kontinuierliche drahtlose Ladungserhaltung bzw. Ladung des Akkumulators ermöglicht. Alternativ kann auch eine Schienenführung zur Stromaufnahme angeordnet sein, die auch direkt mit einer Ladevorrichtung für den Akku eines aufgenommenen e-Bikes verbunden sein kann.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

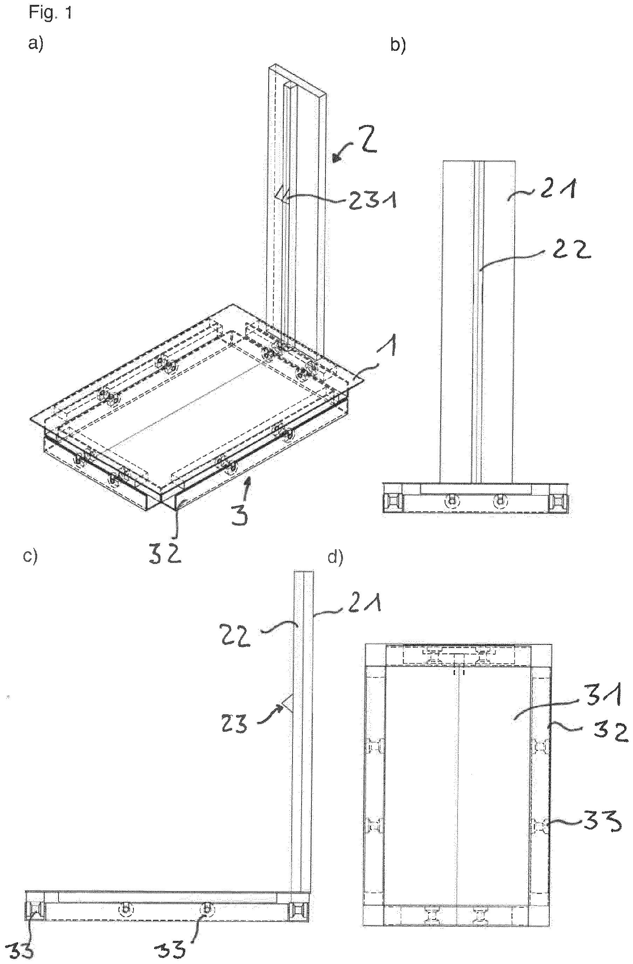

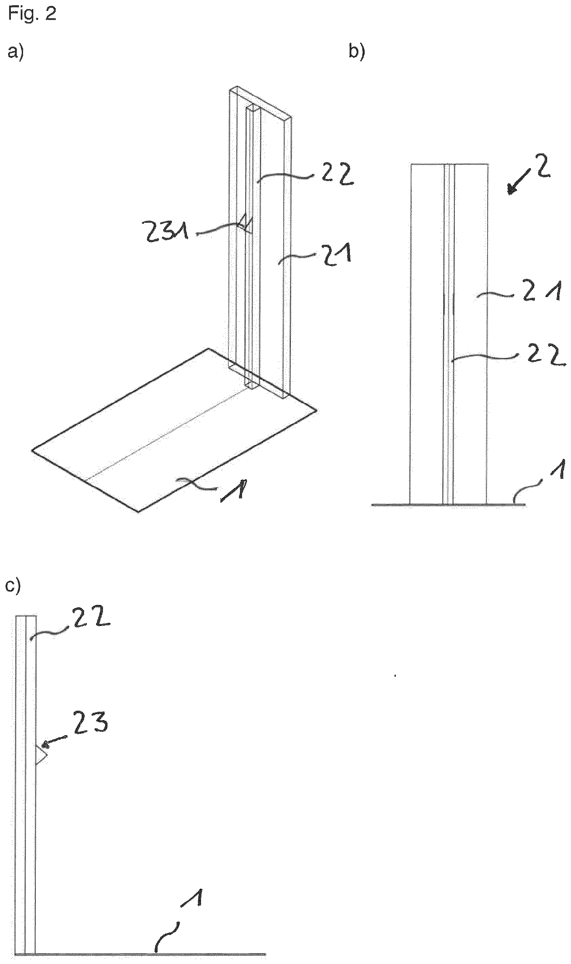

- Figur 1: die schematische Darstellung eines Fördermittels a) in räumlicher Darstellung; b) in der Ansicht von vorne: c) in der Seitenansicht; d) in der Ansicht von unten;
- Figur 2: die schematische Darstellung der Plattform des Fördermittels aus Figur 1 mit Zweiradaufnahme a) in räumlicher Darstellung; b) in der Ansicht von vorne; c) in der Seitenansicht;

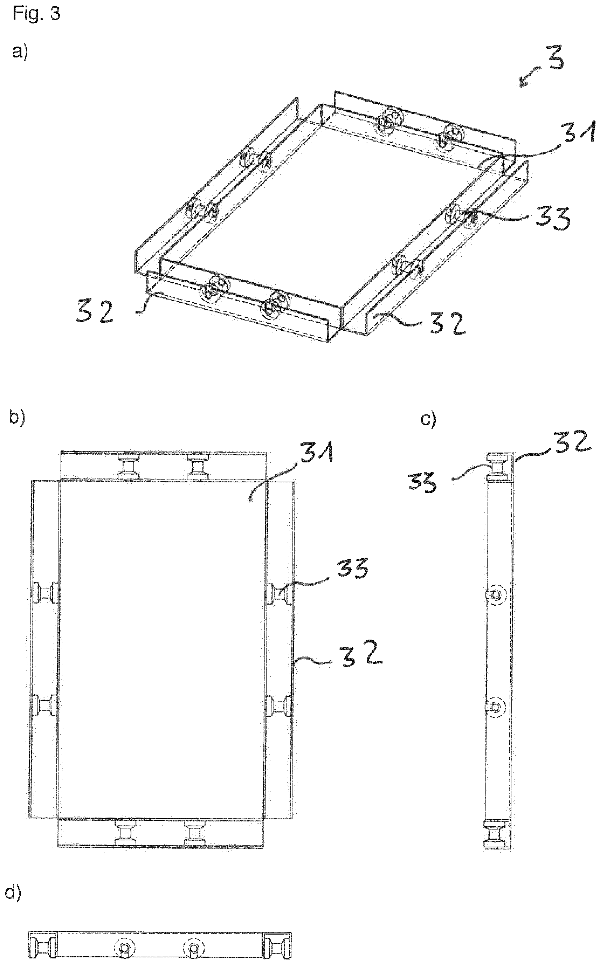

- Figur 3: die schematische Darstellung der Antriebseinheit des Fördermittels aus Figur 1 a) in räumlicher Darstellung (Unterseite); b) in der Draufsicht; c) in der Seitenansicht; d) in der Ansicht von vorne.

Das als Ausführungsbeispiel gewählte Fördermittel besteht im Wesentlichen aus einem Plattform 1, die mit einer orthogonal zu ihrer Oberfläche angestellten Zweiradaufnahme 2 versehen ist und die von einem Antriebsmodul 3 aufgenommen ist.

Die Plattform 1 ist rechteckig ausgebildet und weist im Ausführungsbeispiel eine Länge von 120 cm und eine Breite von 70 cm auf. An einer Querseite ist auf der Plattform 1 orthogonal zur Plattformoberfläche eine Zweiradaufnahme 2 befestigt. Die Zweiradaufnahme 2 umfasst eine im Wesentlichen rechteckig Stützplatte 21, auf deren Längsmittelachs eine Schiene 22 über deren gesamte Länge angeordnet ist, auf der eine Radaufnahme 23 verschiebbar gelagert ist. Die Schiene 22 weist im Ausführungsbeispiel eine Länge von 190 cm auf. Die Radaufnahme 23 umfasst zwei parallel zueinander angeordnete Backen 231, die über - nicht dargestellte - Federelemente gegeneinander vorgespannt sind. Die Radaufnahme 23 ist mit einem - nicht dargestellten - Lineardirektantrieb verbunden, über den die Radaufnahme 23 entlang der Schiene 22 verfahrbar ist. Anstelle des Lineardirektantriebs kann beispielsweise auch ein Riemenantrieb angeordnet sein. Zur Betätigung des Lineardirektantriebs ist an der Stützplatte 21 ein - nicht dargestelltes - Bedienfeld angeordnet.

Das Antriebsmodul 3 ist im Wesentlichen rechteckig ausgebildet, wobei dessen Längs- und Querseiten gegenüber der aufgenommenen Plattform kürzer ausgeführt sind, wodurch das es vollständig von der Plattform 1 überdeckt ist. Das Antriebsmodul 3 umfasst einen - lediglich schematisch angedeuteten - quaderförmigen Antriebs- und Steuerkasten 31. In dem Antriebs- und Steuerkasten 31 ist ein über ein vorhandenes WLAN ansteuerbares Antriebssystem angeordnet. An den Seitenwänden des Antriebs- und Steuerkastens 31 sind nach unten offene, U-förmige Profile 32 angebracht, in denen separat ansteuerbare Radantriebe mit omnidirektionalen Rädern, insbesondere Mecanum-Rädern 33, laufen. Hierbei sind auf jedem Rad 33 mehrere tonnenförmige Rollen im Winkel von 45 Grad zur Achse des Rades montiert. Jedes Rad 33 wird durch einen separat ansteuerbaren Elektromotor mit veränderlichem Drehsinn und variabler Drehzahl angetrieben. Hierdurch kann das die Plattform 1 aufnehmende Antriebsmodul 2 vorwärts, rückwärts und seitwärts bewegt werden.

In dem Antriebs- und Steuerkasten 31 ist weiterhin ein Akkumulator zur elektrischen Versorgung der Elektromotoren sowie auch des Linearantriebs der Zweiradaufnahme 2 angeordnet. Darüber hinaus kann der Akkumulator zum Laden mit einem Ladestecker sowie mit einer Induktionsspuleneinheit zum induktiven Laden über in dem Boden eines Parkhauses angeordnete Induktionsschleifen verbunden sein. Die Induktionsspuleneinheit kann weiterhin mit einem angeordneten Ladeanschluss für ein aufzunehmendes Elektrofahrrad verbunden sein.

Das Fördermittel kann mit einem auf einem angeordneten RFID-Tag befindlichen Überwachungsknoten versehen sein, dessen Status kontinuierlich per Funk ausgesendet wird. Hierdurch ist eine kontinuierliche Erfassung aktueller Positionsdaten über ein in dem Parkhaus vorhandenes Leitrechnersystem ermöglicht.

Zur Lagerung eines Fahrrades wird dieses auf die Plattform geschoben, bis dessen Vorderrad zwischen den Backen 231 der Radaufnahme 23 der Zweiradaufnahme positioniert und eingespannt ist. Anschließend wird die Radaufnahme 23 durch den Lineardirektantrieb entlang der Schiene 22 nach oben bewegt, bis die Räder des Fahrrades an der Schiene 22 anliegen. Nachfolgend kann das mit dem Fahrrad bestückte Fördermittel, gesteuert über ein Leitrechnersystem, automatisch zu einem zugewiesenen Parkplatz gefahren werden. Dabei ist das Fördermittel bevorzugt derart ausgebildet, dass es, bspw. bei einem Ausfall des Leitrechners, autark über ein angeordnetes Bedienfeld gesteuert bzw. verfahren werden kann. Zur weiteren Ladungssicherung können zusätzlich Klemm- oder Zurrmittel zur Fixierung des unteren Rades angeordnet sein. Insbesondere bei einem U-förmigen Querschnitt der Schiene 22 sind solche Mittel jedoch nicht zwingend erforderlich.

Zur Entnahme des Fahrrades wird die Radaufnahme 23 durch den Lineardirektantrieb entlang der Schiene 22 nach unten bewegt, bis die Räder des Fahrrades auf der Plattform 1 aufliegen. Anschließend kann das Fahrrad aus der Radaufnahme 23 entfernt werden.

## Patentansprüche

1. Fördermittel für Zweiräder, insbesondere Fahrräder, zur Einbindung in ein automatisches Parksystem, umfassend eine verfahrbare Plattform (1) mit einer im Wesentlichen orthogonal zu ihrer Oberfläche angestellten Zweiradaufnahme (2), die mit Mitteln zur vertikalen Anstellung und Fixierung eines Zweirades versehen ist, wobei die Plattform (1) mit Rollen oder Rädern versehen ist, über die sie verfahrbar ist, **dadurch gekennzeichnet, dass** die Plattform (1) als FTS-Palette ausgebildet ist und mit einer Steuerung versehen ist, die eine drahtlose Schnittstelle zur Verbindung mit einem Rechnersystem aufweist und die mit einem Antrieb verbunden ist, über den die Rollen bzw. Räder (3) antreibbar sind.

2. Fördermittel nach Anspruch 1, **dadurch gekennzeichnet, dass** die Rollen bzw. Räder bevorzugt als omnidirektionale Räder, vorzugsweise Mecanum-Räder (33) ausgebildet sind.

3. Fördermittel nach Anspruch 1 oder 2, **dadurch gekennzeichnet, dass** Sensoren zur kontinuierlichen Positionsermittlung angeordnet sind, die mit der Steuerung verbunden sind.

4. Fördermittel nach einem der vorgenannten Ansprüche, **dadurch gekennzeichnet, dass** die Zweiradaufnahme (2) eine Radaufnahme (23) aufweist, die entlang einer vertikalen Schiene (22) verfahrbar ist.

5. Fördermittel nach Anspruch 4, **dadurch gekennzeichnet, dass** ein Antrieb angeordnet ist, über den die Radaufnahme (23) entlang der Schiene (22) verfahrbar ist.

6. Fördermittel nach Anspruch 5, **dadurch gekennzeichnet, dass** der Antrieb durch einen Linearmotor gebildet ist.

7. Fördermittel nach einem der Ansprüche 4 bis 6, **dadurch gekennzeichnet, dass** die Radaufnahme (23) zwei gegenüberliegend angeordnete Backen aufweist (231), zwischen denen ein Rad einklemmbar ist.

8. Fördermittel nach Anspruch 7, **dadurch gekennzeichnet, dass** die Backen (231) zueinander verstellbar ausgebildet sind.

9. Fördermittel nach Anspruch 8, **dadurch gekennzeichnet, dass** ein Antrieb angeordnet ist, über den der Abstand der Backen (231) zueinander verstellbar ist.

10. Fördermittel nach einem der vorgenannten Ansprüche, **dadurch gekennzeichnet, dass** auf der Plattform (1) eine Akku-Ladeeinrichtung angeordnet ist, die bevorzugt mit einer autarken Energieversorgung verbunden ist, die insbesondere durch einen Akkumulator gebildet ist.

11. Fördermittel nach Anspruch 10, **dadurch gekennzeichnet, dass** der Akkumulator mit einer Induktionsspuleneinheit verbunden ist, über die er induktiv aufladbar ist.

12. Fördermittel nach einem der vorgenannten Ansprüche, **dadurch gekennzeichnet, dass** die Rollen bzw. Räder (3) über wenigstens einen angeordneten Elektromotor antreibbar sind, der mit einem Akkumulator verbunden ist.

## Claims

1. Conveyor for two-wheelers, in particular bicycles, for integration into an automatic parking system, comprising a displaceable platform (1) with a bicycle receptacle (2) positioned substantially orthogonally to its surface, which is provided with means for vertical positioning and fixation of a bicycle, wherein the platform (1) is provided with rollers or wheels, via which it is displaceable, **characterised in that** the platform (1) is designed as an AGV pallet and is provided with a control, which has a wireless interface for connection to a computer system and which is connected to a drive, via which the rollers or wheels (3) are drivable.

2. Conveyor according to claim 1, **characterised in that** the rollers or wheels are preferably designed as omnidirectional wheels, preferably Mecanum wheels (33).

3. Conveyor according to claim 1 or 2, **characterised in that** sensors for continuous position detection are arranged, which are connected to the control.

4. Conveyor according to one of the previous claims, **characterised in that** the bicycle receptacle (2) has a wheel receptacle (23), which is displaceable along a vertical rail (22).

5. Conveyor according to claim 4, **characterised in that** a drive is arranged, via which the wheel receptacle (23) is displaceable along the rail (22).

6. Conveyor according to claim 5, **characterised in that** the drive is formed by a linear motor.

7. Conveyor according to one of claims 4 to 6, **characterised in that** the wheel receptacle (23) has two oppositely arranged jaws (231), between which a wheel can be clamped.

8. Conveyor according to claim 7, **characterised in that** the jaws (231) are designed to be adjustable relative to one another.

9. Conveyor according to claim 8, **characterised in that** a drive is arranged, via which the distance between the jaws (231) is adjustable.

10. Conveyor according to one of the previous claims, **characterised in that** on the platform (1) a battery charging device is arranged, which is preferably connected to a self-sufficient energy supply, which is particularly formed by an accumulator.

11. Conveyor according to claim 10, **characterised in that** the accumulator is connected to an induction coil unit, via which it is inductively chargeable.

12. Conveyor according to one of the previous claims, **characterised in that** the rollers or wheels (3) are drivable via at least one arranged electric motor, which is connected to an accumulator.

## Revendications

1. Dispositif de transport pour deux-roues, en particulier pour bicyclettes, à intégrer dans un système de parking automatique, comprenant une plateforme (1) déplaçable avec un réceptacle (2) pour deux-roues disposé essentiellement en applique perpendiculaire à sa surface, réceptacle qui est muni de moyens destinés à la mise en applique verticale et à l'immobilisation d'un deux-roues, sachant que la plateforme (1) est munie de roulettes ou de roues lui permettant de la déplacer, **caractérisé en ce que** la plateforme (1) est configurée en palette FTS et munie d'une commande présentant une interface sans fil pour établir la liaison avec un système informatique, et reliée avec un entraînement via lequel il est possible d'entraîner les roulettes et/ou les roues (3).

2. Dispositif de transport selon la revendication 1, **caractérisé en ce que** les roulettes et/ou les roues sont configurées de préférence comme des roues omnidirectionelles, préférentiellement comme des roues Mecanum (33).

3. Dispositif de transport selon la revendication 1 ou 2, **caractérisé en ce que** sont disposés des capteurs, destinés à déterminer continuellement la position, qui sont reliés à la commande.

4. Dispositif de transport selon l'une des revendications précédentes, **caractérisé en ce que** le réceptacle (2) pour deux-roues présente un réceptacle (23) de roue déplaçable le long d'un rail vertical (22).

5. Dispositif de transport selon la revendication 4, **caractérisé en ce qu'**est disposé un entraînement via lequel le réceptacle de roue (23) est déplaçable le long du rail (22).

6. Dispositif de transport selon la revendication 5, **caractérisé en ce que** l'entraînement est formé par un moteur linéaire.

7. Dispositif de transport selon l'une des revendications 4 à 6, **caractérisé en ce que** le réceptacle (23) de roue présente deux mâchoires (231) disposées l'une en face de l'autre, entre lesquelles il est possible de brider une roue.

8. Dispositif de transport selon la revendication 7, **caractérisé en ce que** les mâchoires (231) sont réciproquement ajustables.

9. Dispositif de transport selon la revendication 8, **caractérisé en ce qu'**est disposé un entraînement via lequel l'écart réciproque des mâchoires (231) est ajustable.

10. Dispositif de transport selon l'une des revendications précédentes, **caractérisé en ce qu'**est disposé sur la plateforme (1) un équipement de chargement de batterie relié de préférence à une alimentation énergétique autarcique constituée notamment par un accumulateur.

11. Dispositif de transport selon la revendication 10, **caractérisé en ce que** l'accumulateur est relié à une unité à bobine d'induction via laquelle il est rechargeable par induction.

12. Dispositif de transport selon l'une des revendications précédentes, **caractérisé en ce que** les roulettes et/ou les roues (3) sont entraînables via au moins un moteur électrique installé et qui est relié à un accumulateur.
